# EUROPEAN PATENT SPECIFICATION

(11) **EP 2 928 839 B1**
(45) Date of publication and mention of the grant of the patent: **27.03.2019**
(21) Application number: 13798412.6
(22) Date of filing: 21.10.2013
(51) Int. Cl.: C04B 28/04, C04B 103/54, C04B 111/80

(54) **WHITE OR COLORED CEMENTITIOUS MIXTURE FOR MANUFACTURE OF CONCRETE, MORTAR AND INTERACTIVE PASTES WITH PHOTOLUMINESCENT PROPERTIES**
WEISSE ODER FARBIGE ZEMENTÖSE MISCHUNG FÜR DIE HERSTELLUNG VON BETON, MÖRTEL UND INTERAKTIVEN PASTEN MIT PHOTOLUMINESZIERENDEN EIGENSCHAFTEN
MÉLANGE CIMENTAIRE BLANC OU COLORÉ DESTINÉ À LA FABRICATION DE BÉTON, DE MORTIER ET DE PÂTES INTERACTIVES AUX PROPRIÉTÉS PHOTOLUMINESCENTES

(30) Priority: 22.10.2012 PT 12106590
(43) Date of publication of application: 14.10.2015
(73) Proprietor: Secil S.A. Companhia geral de cal e cimento, 2901-864 Setúbal (PT)
(72) Inventor: JESUS DE SEQUEIRA SERRA NUNES, Angela Maria, 2925-181 Vila Nogueira De Azeitão (PT)
(74) Representative: Pereira da Cruz, Joao
(86) International application number: PCT/PT2013/000059
(87) International publication number: WO 2014/065683

(56) References cited:
- WO-A1-03/089382
- WO-A1-2011/057898
- US-A1- 2003 051 638
- DATABASE WPI Week 201010 Thomson Scientific, London, GB; AN 2010-B03460 XP002722053, & CN 101 624 276 A (SHANTOU SPECIAL ECONOMIC DISTRICT LONG L) 13 January 2010 (2010-01-13)

## Description

### FIELD OF THE INVENTION

The present invention falls in the field of new building materials, particularly in micro-concrete and concrete, mortar and pastes produced from preweighed cementitious mixtures with photoluminescent properties, with preferential application in the fields of coating mortars, in the prefabrication, in *in-situ* concreted superstructures, in urban furniture and other decorative elements for exterior and interior, namely coating ones, allowing those surfaces to become interactive in the dark due to the incidence of a dynamic light source, and thus obtaining a material response by luminescent irradiation which reproduces the displacement of the emission source. This makes it possible to write or draw on the elements executed with said cementitious mixture or coated with the mortar or cementitious painting which were prepared using said cementitious mixture.

### BACKGROUND OF THE INVENTION

The exposed concrete, i.e., with high performance at architectural level, is presently a widely used material in architecture and civil engineering, allowing answering to many technical and aesthetic challenges required by current architectonic trends. Also the coating mortars, such as plastering and finishing pastes, are widely used in the walls of buildings and constructions in general.

The possibility of confering interactivity to concrete and mortar under the effect of a light stimulus is very interesting, both in the point of view of architecture and in the communication and information levels, including security. In addition to the architectural interest, the possibility of draw in large scale on a concrete or plaster surface, and the said drawing disappear after some time (time decay is a function of the beam intensity and of the concentration of the luminescent pigment) leaving the surface with the initial appearance, can also be of interest from the point of view of energy efficiency, allowing the material to accumulate radiation which will later serve as light source, in the night time, and allowing some savings.

This preweighed cementitious mixture with predefined luminescent properties can be used in the manufacture of coating and finishing mortars, in finishing and painting pastes, and also in prefabricated and *in-situ* concrete, thus confering the referred properties to the material in its final shape.

Patent JP2009126769 refers to a product resulting from the application of a phosphorescent pigment on a surface of a pre-existing concrete, through a vehicle for anti-alkalis protection of silane type, with rapid dissolution and loss of pigment efficiency given the difficulties in fixing on the surface. As the pigment is not initially incorporated it may be incompatible with the alkaline medium, and the mixture is not used in the entire mass of the piece, forming only one thin film layer on the surface.

Patent RU 238579 allows providing photoluminescent properties to ceramic materials by thermal sintering processes.

In the patent application WO201013485, the photoluminescent properties in a concrete are achieved by placing glass grains with these properties so as they appear at the concrete surface, in which the cementitious mixture which allows the production of concretes does not have these properties.

Patent JP2010019001 refers to the production of a luminescent concrete, using luminescent pigments, but not through a cementitious mixture of fine powders, dry, and preweighed.

In the Patent DE 4235333 is referred the formation of a removable polymeric phosphorescent film on stone and ceramic surfaces, which allows differential absorption of light.

Patent CN 173693 refers to the photoluminescence of ceramic blocks that absorb solar energy.

Patent application US 2003/0051638 discloses a cementitious product with phosphorescence, which produces a long-lasting luminescence, for up to 8 to 12 hours, after exposure to a radiation source.

### BRIEF DESCRIPTION OF THE FIGURES

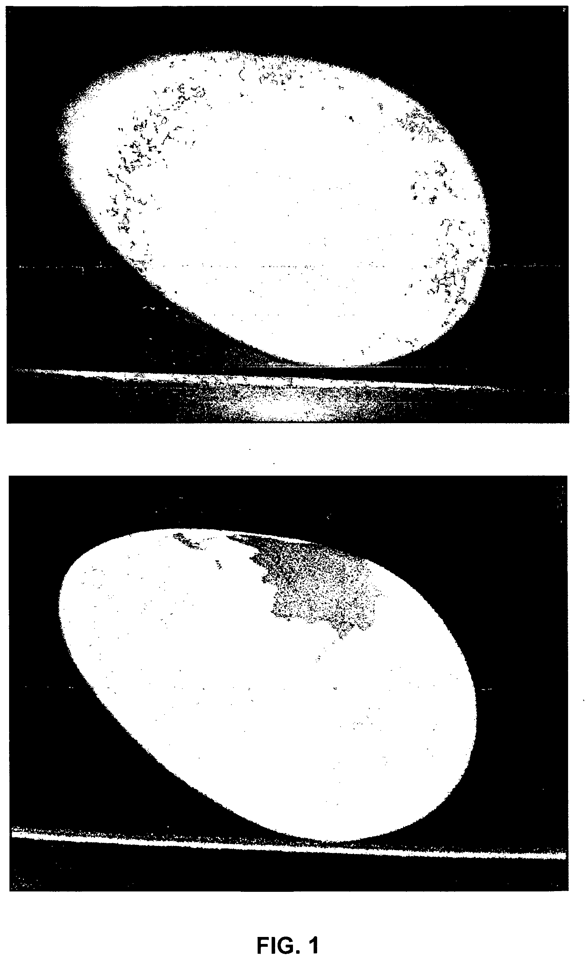

Figure 1 shows applications of the cementitious mixture in self-compacting micro-cement with high architectural performance and interactivity in the dark due to photoluminescence (total absorption in the daytime).

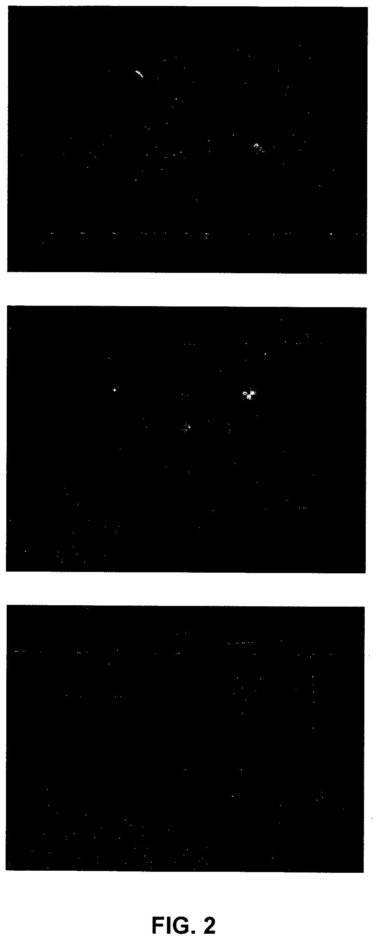

Figure 2 shows applications of the cementitious mixture in self-compacting micro-cement with high architectural performance and interactivity in the dark due to photoluminescence (interactive effect with incidence of light focus on the surface).

### SUMMARY OF THE INVENTION

This invention allows solving the technical problem consisting on allowing having a preweighed cementitious mixture which can confer luminescence in the dark to concrete, mortar, pastes and paintings/limewash prepared with it, when excited by a light source. This capability allows concrete, mortar, pastes and paintings/limewash to react in the dark to a dynamic light beam, with this reaction decaying sometime after the emission of light. This allows drawing and writing with a light beam in the dark on those materials produced with the mixture, and retaining this image for some time, thus becoming interactive. Alternatively, if the piece is illuminated, for instance, by sunlight during the day, it will emits light at night in the direct proportion of the exposed area and of the relative intensity to which it was exposed, and the illuminated surface allows saving lighting.

A technical solution has been found which allows, departing from the addition of photoluminescent pigments to the cement by combining a number of polymers, to stabilize the mixture and enable its dissolution in the cementitious medium, without changing the performance of the remaining features when acting and with acceptable durability considering the type of product (in most cases it is estimated more than 5 years). This fact allows the production of concrete, mortar, and cementitious pastes/ paintings that respond to visible light stimuli in the dark, keeping reversibly the other properties.

### DETAILED DESCRIPTION OF THE INVENTION

The present invention relates to a stable cementitious mixture which allows the production of concrete, mortar and pastes with photoluminescent properties. This cementitious mixture allows confering photoluminescence to the surfaces of cementitious materials when excited by a light source, thus making the surface interactive and visible in the dark.

This possibility can also be used as a light source, by absorbing sunlight during the day and emitting at night during the decay time, allowing energy saving of lighting.

Among generic processes and general applications are included:
- Execution of walls and floors, or other structural elements cast *in situ* or prefabricated in concrete;
- Façades of buildings (large façade elements or prefabricated panels);
- Viaduct superstructures and edge beams;
- Road, pedestrian and aeronautical paving made of concrete, both urban and non-urban;
- Urban furniture and other interior and exterior decorative elements;
- Roofs and roofing materials;
- Thin layer coatings of walls such as plasters and tinplating pastes;
- Silicated paintings based on the photoluminescent cementitious mixture for application on concrete, ceramics, and other compatible surfaces;
- Security signage in concrete or micro-concrete.

Compared to products of similar performance, those herein described stand out by the ability of emitting radiation during a controlled decay time, when previously excited by a light source.

White cements of high brightness and strength are used as binders, which are modified by polymers and copolymers in order to allow pigment dissolution and its protection in the highly alkaline medium, promoting good workability and high grip in order to be compatible with thin wall applications.

In addition, the desired effect was obtained by joining several high reactivity and fineness materials such as metakaolins, pozzolan of high activity, reactive calcium hydroxides, calcium sulfates of high fineness, and other oxides such as zinc, which allow lowering the pH of the mixture and facilitate the compatibility and stability of the pigment as well as its durability without substantial loss of reactivity from the binder.

On the other hand, the addition of a series of super-plasticizers based on polycarboxylate, melamine and other waterproofing effect materials such as stearates of calcium and zinc, as well as modified polyvinyl resins, also helps in the stability and effect of the copolymer pigment, due to an effective reduction of the mixing water and enabling to obtain a high compactness and grip to the substrate, compatible with the desired mechanical performance.

### Object of the Invention

The object of the present invention is a cementitious mixture with interactive properties through a photoluminescent stimulus, with an high fluidity, easy to apply, highly homogeneous, with high adhesion when applied in layers of low thickness, usable in the production of concrete, mortar, silicate/cementitious pastes and paintings, comprising the following components, in percentage in weight of the components relative to the total weight of the composition:
a) 35-80% of white or gray Portland cement;
b) 0.1-30% of ground limestone filler having a particle size less than 90 microns;
c) 0.01-3% of super-plasticizer;
d) 0.01-3% of modified polyvinyl resins;
e) 0.01-5% of dispersant of vinyl acetate and ethylene copolymers;
f) 0.3-20% of photoluminescent pigment based on strontium aluminate, or other, of various colors;
and also one or more components selected from:
g) 1-10% of binding regulator;
h) 0.1-4% of zinc stearate;
i) 1-20% of metakaolins;
j) 5-60% of artificial pozzolans;
k) 0.1-15% of inorganic pigments.

Usually the component c) consists of sulfonated melamine condensates, or equivalent.

Preferably the component d) is present in a percentage by weight of 0.15-0.60%.

The component e) is generally present in a percentage by weight of 1-2%; component f) is usually present in a percentage by weight of 1-5% and can presents itself in various hues.

The binding regulator referred as component g) is preferably plaster in a percentage by weight of 1-5%.

The component h) is generally present in a percentage by weight of 0.25-1.65%; the component i) is present in a percentage by weight of 2-10%; and the component j), usually calcined clay, is present in a percentage by weight of 10-50%.

In the case of a colored substrate concrete, the component k) is present and it is generally constituted by metal oxide pigments.

Usually, the micro-concrete or mortar produced from the cementitious mixture according to the invention has a high mechanical strength to compression, depending on the used cementitious mixture dosage, which shall never be less than about 380 kg/m³ of concrete, in order to ensure a correct finishing and the desired wall effect, i.e., it is very smooth to allow a better perception of interactivity.

### Preparation Examples

In the following, some examples of application of this cementitious mixture according to the invention are presented. These examples are intended to better illustrate the invention without any limitation on the content thereof.

### Example 1:

### Self-compacting micro-concrete with high architectural performance and interactivity in the dark due to photoluminescence:

| | Component of the Cementitious Mixture | Weight% |
|---|---|---|
| 1 | White Portland cement | 67.6 |
| 2 | Finely ground limestone filler | 15.0 |
| 3 | Condensate of sulfonated melamine | 0.6 |
| 4 | Modified polyvinyl resin | 0.4 |
| 5 | Metakaolin | 7.0 |
| 6 | Dispersant of vinyl acetate and ethylene copolymers | 1.2 |
| 7 | Photoluminescent pigment (strontium aluminate) | 8.0 |
| 8 | Zinc stearate | 0.2 |

### Manufacturing steps:

Place the components 1, 2, 3, 4, 5, 6, 7 and 8 in a high efficiency mixer for at least 120 s. The cementitious mixture is ready to use. Add this mixture in 3 parts of silica sand and 1 part of cementitious mixture to fabricate the micro-concrete, adding water until the mixture is fluid and homogeneous, very easy to apply. Pour in directly into the mold of the piece to produce.

### Example 2:

### Colored cementitious painting interactive due to photoluminescence

| | Component of the Cementitious Mixture | Weight% |
|---|---|---|
| 1 | White Portland cement | 62.10 |
| 2 | Finely ground limestone filler | 5.00 |
| 3 | Condensate of sulfonated melamine | 0.60 |
| 4 | Modified polyvinyl resin | 0.25 |
| 5 | Artificial white pozzolan | 17.00 |
| 6 | Dispersant of vinyl acetate and ethylene copolymers | 1.20 |
| 7 | Photoluminescent pigment (strontium aluminate) | 12.00 |
| 8 | Binding regulator | 1.50 |
| 9 | Zinc stearate | 0.35 |

### Manufacturing steps:

Place components 1 to 9 in the mixer and mix for at least 120 s. Add an aqueous acrylic emulsion with a concentration of 25% to this cementitious mixture, in the proportion of 2 parts of emulsion to 1 part of cementitious mixture and dissolve well, preferably using a spiral mixer. Apply the limewash on the surface with the help of a paint roller in at least two coats and in the absence of rain, excessive humidity or temperatures below 5°C, in a clean surface.

## Claims

1. Cementitious mixture with interactive properties by photoluminescent stimulus, usable in the production of concrete, mortar, pastes and silicated paintings/cementitious limewash, **characterized in that** it comprises the following components, in percentage in weight of the components relative to the total weight of the composition:
a) 35-80% of white or gray Portland cement;
b) 0.1-30% of ground limestone filler having a particle size less than 90 microns;
c) 0.01-3% of super-plasticizer;
d) 0.01-3% of modified polyvinyl resins;
e) 0.01-5% of dispersant of vinyl acetate and ethylene copolymers;
f) 0.3-20% of photoluminescent pigment;
and also one or more components selected from:
g) 1-10% of binding regulator;
h) 0.1-4% of zinc stearate;
i) 1-20% of metakaolins;
j) 5-60% of artificial pozzolans;
k) 0.1-15% of inorganic pigments.

2. Cementitious mixture according to claim 1, **characterized in that** the component c) is composed of sulfonated melamine condensates.

3. Cementitious mixture according to claim 1 or 2, **characterized in that** the component d) is present in a percentage by weight of 0.15-0.60%.

4. Cementitious mixture according to any one of claims 1 to 3, **characterized in that** the component e) is present in a percentage by weight of 1-2%.

5. Cementitious mixture according to any one of claims 1 to 4, **characterized in that** the component f) is constituted by strontium aluminate in a percentage by weight of 1-8%.

6. Cementitious mixture according to any one of claims 1 to 5, **characterized in that** the component g) is plaster in a percentage by weight of 1-5%.

7. Cementitious mixture according to any one of claims 1 to 5, **characterized in that** the component h) is present in a percentage by weight of 0.25-0.65%.

8. Cementitious mixture according to any one of claims 1 to 5, **characterized in that** the component i) is present in a percentage by weight of 2-10%.

9. Cementitious mixture according to any one of claims 1 to 5, **characterized in that** component j) is present in a percentage by weight of 10-50%.

10. Cementitious mixture according to any one of claims 1 to 9, **characterized in that** the component k) is constituted by inorganic pigments based on metal oxides.

## Patentansprüche

1. Zementhaltige Mischung mit interaktiven Eigenschaften durch nachleuchtendem Stimulus, einsetzbar in der Herstellung von Beton, Mörtel, Pasten und Silikatfarben/zementöse Kalkmilch, **dadurch gekennzeichnet, dass** es folgende Komponente umfasst, in prozentual Gewichtung der Komponente in Bezug auf das Gesamtgewicht der Komposition:
a) 35-80% weißes oder graues Portlandzement;
b) 0.1-30% gemahlener Kalksteinfüller mit einer Partikelgröße von weniger als 90 Mikrometer;
c) 0.01-3% Superweichmacher;
d) 0.01-3% modifiziertes Polyvinylharz;
e) 0.01-5% Dispergiermittel von Vinylacetat und Ethylencopolymere;
f) 0.3%-20% nachleuchtende Pigmente;
und auch eines oder mehrere Komponente ausgewählt von:
g) 1-10% bindenden Regulierers;
h) 0.1-4% Zinkstearat;
i) 1-20% Metakaolin;
j) 5-60% künstliches Puzzolan;
k) 0.1-15% anorganische Pigmente.

2. Zementhaltige Mischung nach Anspruch 1, **dadurch gekennzeichnet, dass** die Komponente c) aus sulfonierten Melaminkondensaten besteht.

3. Zementhaltige Mischung nach Anspruch 1 oder 2, **dadurch gekennzeichnet, dass** die Komponente d) in einem Gewichtsprozentsatz von 0.15-0.60% vorhanden ist.

4. Zementhaltige Mischung nach jedem der Ansprüche 1 bis 3, **dadurch gekennzeichnet, dass** die Komponente e) in einem Gewichtsprozentsatz von 1-2% vorhanden ist.

5. Zementhaltige Mischung nach jedem der Ansprüche 1 bis 4, **dadurch gekennzeichnet, dass** die Komponente f) aus Strontiumaluminat in einem Gewichtsprozentsatz von 1-8% gebildet ist.

6. Zementhaltige Mischung nach jedem der Ansprüche 1 bis 5, **dadurch gekennzeichnet, dass** die Komponente g) Gips in einem Gewichtsprozentsatz von 1-5% ist.

7. Zementhaltige Mischung nach jedem der Ansprüche 1 bis 5, **dadurch gekennzeichnet, dass** die Komponente h) in einem Gewichtsprozentsatz von 0.25-0.65% vorhanden ist.

8. Zementhaltige Mischung nach jedem der Ansprüche 1 bis 5, **dadurch gekennzeichnet, dass** die Komponente i) in einem Gewichtsprozentsatz von 2-10% vorhanden ist.

9. Zementhaltige Mischung nach jedem der Ansprüche 1 bis 5, **dadurch gekennzeichnet, dass** die Komponente j) in einem Gewichtsprozentsatz von 10-50% vorhanden ist.

10. Zementhaltige Mischung nach jedem der Ansprüche 1 bis 9, **dadurch gekennzeichnet, dass** die Komponente k) aus anorganischen Pigmenten von Metalloxiden gebildet ist.

## Revendications

1. Mélange cimentaire présentant des propriétés interactives par stimulus photoluminescent, utilisable dans la fabrication de béton, de mortier, de pâtes et de peintures au silicate/lait de chaux à base de ciment, **caractérisé en ce qu'**il comprend les composants suivants, en pourcentage en poids des composants par rapport au poids total de la composition :
a) 35 à 80% de ciment Portland blanc ou gris ;
b) 0,1 à 30% de matériau de remplissage calcaire finement broyé en particules d'une dimension inférieure à 90 microns ;
c) 0,01 à 3% de superplastifiant ;
d) 0,01 à 3% de résines polyvinyliques modifiées ;
e) 0,01 à 5% d'agent dispersant à base de copolymères d'acétate de vinyle et d'éthylène ;
f) 0,3 à 20% de pigment photoluminescent ;
et également un ou plusieurs composants choisis parmi :
g) 1 à 10% de régulateur de liaison ;
h) 0,1 à 4% de stéarate de zinc ;
i) 1 à 20% de métakaolins ;
j) 5 à 60% de pouzzolanes artificielles ;
k) 0,1 à 15% de pigments inorganiques.

2. Mélange cimentaire selon la revendication 1, **caractérisé en ce que** le composant c) est constitué de condensats de mélamine sulfoné.

3. Mélange cimentaire selon la revendication 1 ou 2, **caractérisé en ce que** le composant d) est présent en un pourcentage en poids de 0,15 à 0,60%.

4. Mélange cimentaire selon l'une quelconque des revendications 1 à 3, **caractérisé en ce que** le composant e) est présent en un pourcentage en poids de 1 à 2%.

5. Mélange cimentaire selon l'une quelconque des revendications 1 à 4, **caractérisé en ce que** le composant f) est présent en un pourcentage en poids de 1 à 8%.

6. Mélange cimentaire selon l'une quelconque des revendications 1 à 5, **caractérisé en ce que** le composant g) est du plâtre en un pourcentage en poids de 1 à 5%.

7. Mélange cimentaire selon l'une quelconque des revendications 1 à 5, **caractérisé en ce que** le composant h) est présent en un pourcentage en poids de 0,25 à 0,65%.

8. Mélange cimentaire selon l'une quelconque des revendications 1 à 5, **caractérisé en ce que** le composant i) est présent en un pourcentage en poids de 2 à 10%.

9. Mélange cimentaire selon l'une quelconque des revendications 1 à 5, **caractérisé en ce que** le composant j) est présent en un pourcentage en poids de 10 à 50%.

10. Mélange cimentaire selon l'une quelconque des revendications 1 à 9, **caractérisé en ce que** le composant k) est constitué de pigments inorganiques à base d'oxydes métalliques.
